# EUROPÄISCHE PATENTANMELDUNG

(11) **EP 3 216 353 A1**
(43) Veröffentlichungstag der Anmeldung: **13.09.2017**
(21) Anmeldenummer: 16159252.2
(22) Anmeldetag: 08.03.2016
(51) Int. Cl.: A23L 15/00, A23L 29/238, A23L 29/212

(54) **EI-ERSATZPRODUKT**

(71) Anmelder: Antersdorfer Mühle GmbH & Co Vertriebs KG, 84359 Simbach am Inn (DE)
(72) Erfinder: Priemeier, Johann, 84359 Simbach am Inn (DE)
(74) Vertreter: Rothkopf, Ferdinand

(57) **Zusammenfassung**

Bei einem erfindungsgemäßen Ei-Ersatzprodukt 10 sind gezielt zumindest zwischen 0,3 und 25,0 Gewichtsprozent Lecithin pflanzlicher Herkunft enthalten.

## Beschreibung

Die Erfindung betrifft ein Ei-Ersatzprodukt, welches zum Ersetzen von ansonsten natürlichem Ei bei dessen Verwendung als Lebensmittel dient.

Eier, insbesondere Hühnereier, sind ein vielseitiges Nahrungsmittel und eine vielverwendete Nahrungsmittelkomponente. Allerdings verursacht das im Ei enthaltene Cholesterin für manche Nahrungszusammenstellungen Probleme. Außerdem gibt es gesundheitliche Bedenken hinsichtlich des Gehalts an gesättigten Fettsäuren im Ei und der Gefahr einer Salmonellen-Kontamination von Eiern. Natürliche Eier vollständig vermeiden sollten ferner Menschen mit einer Hühnereiallergie. Manche Menschen lehnen den Verzehr von Eiern aus ethischen Gründen ab, z.B. wenn sie sich vegan ernähren. Um solchen Bedenken und Problemen entgegenzuwirken, wurden bereits zahlreiche Produkt-Zusammensetzungen vorgeschlagen, die natürliche Eier ersetzen sollen.

Trotz intensiver Anstrengungen waren bisher solche Ei-Ersatzprodukte nicht so erfolgreich wie erwünscht. Ein dabei bestehender Problempunkt ist die Verwendung innerhalb von Nahrungsmitteln, da die rheologischen Eigenschaften von bekannten Ei-Ersatzprodukten wesentlich von denen der natürlichen Eier abweichen. Ein Koch, der ein Ei-Ersatzprodukt nutzt, zum Beispiel um Kuchen oder Pfannenkuchen zuzubereiten, erwartet etwa, dass die Zusammensetzung des Ei-Ersatzprodukts dünnflüssig ist und über einen längeren Zeitraum vor dem Kochen so bleibt. Es wird ferner erwartet, dass während des Kochens eine Koagulation bzw. Gerinnung auftritt. Das hergestellte Produkt sollte, wenn es serviert und vom Konsumenten gegessen wird, eine ähnliche Konsistenz haben, wie ein Produkt, das aus natürlichen Eiern hergestellt worden ist.

Ferner erfordert eine Zubereitung von vorgeschlagenen Ei-Ersatzprodukten oft eine komplizierte Verarbeitung, die manchmal eine teuere Ausrüstung und/oder die Verwendung von Ingredienzen verlangt, die nicht leicht verfügbar oder teuer sind. Es gibt auch Probleme mit Fremdgeschmack von bestimmten Ingredienzen oder Verarbeitungsschritten.

Die dieser Erfindung zugrundeliegende Aufgabe beinhaltet, ein Ei-Ersatzprodukt zu schaffen, dass geschmacklich und in der Konsistenz einem natürlichen Voll-Ei möglichst nahe kommt, ohne die oben erwähnten Nachteile aufzuweisen.

Die Aufgabe ist gemäß der Erfindung mit einem Ei-Ersatzprodukt gelöst, das zwischen 0,3 (null Komma drei) und 25,0 (fünfundzwanzig Komma null) Gewichtsprozent Lecithin pflanzlicher Herkunft umfasst.

Der Name Lecithin bzw. Lezithin leitet sich aus dem Griechischen "lekithos" (Eidotter) ab. Lecithin ist in Eidotter mit 10 (zehn) Gewichtsprozent enthalten. Lecithin pflanzlicher Herkunft wird in der Regel aus Pflanzenölen gewonnen. Bei der Gewinnung von Lecithin wird zunächst Pflanzenöl hergestellt und mit Hilfe von Wasserdampf die im Öl enthaltenen Lecithine herausgelöst. Pflanzenöle für die Lecithin Produktion werden in der Regel aus Soja, Raps, Sonnenblumen hergestellt. Raps und Sonnenblumen als Lecithin-Lieferanten sind von Vorteil bei der Herstellung von "genfreien Bioprodukten" da mehr als siebzig Prozent der weltweiten Soja-Ernte aus gentechnisch veränderten Soja-Pflanzen stammt. Daher wird Soja bei kritischen Menschen, insbesondere bei Veganern, als Lecithinlieferant negativ gesehen. Ein Vorteil von Lecithin pflanzlicher Herkunft ist, dass es reich an ungesättigten Fettsäuren ist. Wie allgemein bekannt weisen ungesättigte Fettsäuren gegenüber gesättigten Fettsäuren vielfältige Vorteile für die Gesundheit des Konsumenten auf. Ebenfalls für die Gesundheit des Konsumenten von Vorteil ist Lecithin pflanzlicher Herkunft in doppelter Hinsicht, da dass Lecithin pflanzlicher Herkunft weniger Cholesterin enthält als das Ei. Zudem wird eine Zelle bei steigendem Lecithin-Gehalt in der Zellmembran aktiver. Das Lecithin verdrängt starres Cholesterin. Die Stressbelastung der Zelle wird verringert. Ein "Anti-Aging-Effekt" tritt auf. Das Lecithin wird bevorzugt als Pulver oder Granulat verwendet, kann vorteilhaft aber auch in flüssiger Form genutzt werden.

Das vorliegende Ei-Ersatzprodukt wird bevorzugt in Pulverform oder als Granulat hergestellt. Zum Erzeugen eines weitgehend einem natürlichen Voll-Ei entsprechenden Produktes, wird das Ei-Ersatzprodukt gemäß der Erfindung dann mit Wasser versetzt. Vorzugsweise sind hier 5 (fünf) g des pulverförmigen Ei-Ersatzproduktes mit 10 (zehn) bis 30 (dreißig) ml Wasser zu vermischen. Bevorzugt ergeben 5 (fünf) g auf 15 (fünfzehn) bis 25 (fünfundzwanzig) ml Wasser und besonders bevorzugt ergeben 5 (fünf) g Ei-Ersatzprodukt und 18 (achtzehn) bis 22 (zweiundzwanzig) ml Wasser ein einem einzelnen Voll-Ei ähnliches Produkt. Um ein einem Hühnerei in der Gewichtsklasse M ohne Eierschale mit ca. 50 (fünfzig) g entsprechendes Produkt zu erhalten, sind 10 (zehn) g Ei-Ersatzprodukt und 40 (vierzig) ml Wasser zu vermischen. Der Vorteil des Ei-Ersatzproduktes in Pulverform liegt vor allem in einem relativ zum Voll-Ei verringerten Gewicht und den daraus resultierenden geringeren Transportkosten des Ei-Ersatzproduktes. Alternativ dazu ist das erfindungsgemäße Ei-Ersatzprodukt bereits mit Wasser versetzt und liegt dann wie ein natürliches Voll-Ei in flüssiger oder zähflüssiger Form vor. Das Ei-Ersatzprodukt kann dann einem natürlichen Voll-Ei entsprechend direkt verwendet werden, ohne dass es vorher mit Wasser zu vermischen wäre. Insbesondere umfasst das erfindungsgemäße Ei-Zusatzprodukt vorteilhaft mehr als 0,5 (null Komma fünf) Gewichtsprozent, besonders bevorzugt mehr als 3,0 (drei Komma null) Gewichtsprozent Lecithin. Mit einem derartigen Lecithin-Gehalt ist ein besonders vollwertiges Nahrungsmittel geschaffen.

Das erfindungsgemäße Ei-Ersatzprodukt weist verbesserte gesundheitliche und rheologische Eigenschaften auf. Es ist aus einem leicht verfügbaren Material einfach herzustellen. Überraschenderweise wurde mit der Erfindung festgestellt, dass das derartige Ei-Ersatzprodukt in einem konsumierbaren Produkt resultiert, das seine Frische länger beibehalten kann als vergleichbare Produkte, die aus echten bzw. natürlichen Eiern hergestellt wurden. Beispielsweise können Kuchen oder Pfannenkuchen aus echten Eiern, wenn sie zum Beispiel einige Stunden vor dem Verzehr hergestellt werden, hart werden und dann im Mund zu einem verschlechterten Kaugefühl führen. Kuchen und Pfannenkuchen, die mit dem erfindungsgemäßen Ei-Ersatzprodukt hergestellt sind, behalten dahingegen hinsichtlich der Zusammensetzung und des Geschmacks über einen längeren Zeitraum gute Eigenschaften. Produkte aus dem erfindungsgemäßen Ei-Ersatzprodukt bleiben im Vergleich zu Voll-Ei länger weich und frisch. Ein weiterer Vorteil des Ei-Ersatzproduktes gemäß der Erfindung ist eine vergleichsweise hohe Lebensmittelsicherheit der damit hergestellten Lebensmittel. Lebensmittelsicherheit ist ein Oberbegriff für alle Maßnahmen und Konzepte, die sicherstellen sollen, dass Lebensmittel für den Endverbraucher zum Verzehr geeignet sind und von ihnen keine gesundheitlichen Beeinträchtigungen oder Schädigungen ausgehen können. Die Lebensmittelsicherheit ist für Lebensmittel, die mit dem erfindungsgemäßen Ei-Ersatzprodukt hergestellt wurden, einfacher zu gewährleisten als mit Voll-Ei, weil insbesondere die Gefahr einer Salmonellen-Kontamination wegfällt.

Erfindungsgemäß bevorzugt umfasst das derartige Ei-Ersatzprodukt zwischen 6,5 (sechs Komma fünf) und 18,8 (achtzehn Komma acht) Gewichtsprozent Lecithin pflanzlicher Herkunft, insbesondere zwischen 10,0 (zehn Komma null) und 15,0 (fünfzehn Komma null) Gewichtsprozent Lecithin pflanzlicher Herkunft. Dieser Anteil an Lecithin in dem erfindungsgemäßen Ei-Ersatzprodukt ergibt überraschenderweise ein besonders gutes Mundgefühl für den Konsumenten. Der Konsument empfindet das Ei-Ersatzprodukt als näher an das natürliche Voll-Ei reichend. Dem Voll-Ei gegenüber vorteilhaft ist, dass das erfindungsgemäße Ei-Ersatzprodukt mit den oben genannten Gewichtsprozenten über 10,0 (zehn Komma Null) Gewichtsprozent Lecithin pflanzlicher Herkunft einen höheren Lecithin-Anteil aufweist, als das natürliche Voll-Ei. Da Lecithin ein Antioxidationsmittel ist, wird das Ei-Ersatzprodukt gemäß der Erfindung so besser vor dem Verderb durch Reaktion mit Sauerstoff aus der Umgebungsluft geschützt, als natürliches Voll-Ei. Bei dem Ei-Ersatzprodukt verschlechtert sich dadurch das Mundgefühl langsamer, als bei einem Voll-Ei. Das hergestellte Produkt bleibt für den Konsumenten länger "frisch". Ein höherer Lecithin-Gehalt als bei einem Voll-Ei ist zudem für die Gesundheit des Konsumenten von Vorteil. Lecithin pflanzlicher Herkunft trägt zur Senkung des Cholesterinspiegels bei und dient zur gefäßschützenden Wirkung und Prävention bei Schlaganfall. Es wird zu diesem Zweck z.B. mindestens 5 (fünf) Gramm Lecithin pflanzlicher Herkunft täglich empfohlen.

Ferner umfasst das Ei-Ersatzprodukt gemäß der Erfindung vorteilhaft zwischen 0,1 (null Komma eins) und 5,0 (fünf Komma null) Gewichtsprozent Ascorbinsäure, insbesondere zwischen 0,3 (Null Komma drei) und 0,8 (null Komma acht) Gewichtsprozent Ascorbinsäure. Ascorbinsäure ist auch als Vitamin C bekannt. Es ist ein Vitamin, das vom Menschen kontinuierlich mit der Nahrung aufgenommen werden muss. Neben allgemein bekannten, gesundheitlichen Vorteilen von Ascorbinsäure, ist Ascorbinsäure ein Antioxidationsmittel, welches dazu führt, dass das erfindungsgemäße Ei-Ersatzprodukt lange seine Konsistenz beibehält. Die Ascorbinsäure wird gemäß der Erfindung bevorzugt als Pulver oder Granulat verwendet. Alternativ ist die Ascorbinsäure durch Acerolapulver zu ersetzen. Das Pulver aus der Acerola Kirsche weist mit seinen ca. 1700 (eintausendsiebenhundert) mg Vitamin C pro 100 (einhundert) g frischer Frucht einen besonders hohen Vitamin-C-Gehalt auf. Aufgrund seiner natürlichen Herkunft ist Acerolapulver besonders vorteilhaft für Menschen, die sich bewusst ernähren möchten. In bevorzugter Weise umfasst ferner das Ei-Ersatzprodukt gemäß der Erfindung zwischen 3,0 (drei Komma null) und 13,0 (dreizehn Komma null) Gewichtsprozent Kürbis, insbesondere zwischen 4,0 (vier Komma null) und 6,5 (sechs Komma fünf) Gewichtsprozent Kürbis. Der Kürbis wird bevorzugt getrocknet in Pulverform oder als Granulat verarbeitet. Neben allgemein bekannten gesundheitlichen Vorteilen, weist Kürbis eine gelbliche Farbe auf und damit erfindungsgemäß auch zur Farbgestaltung des Ei-Ersatzprodukts gemäß der Erfindung verwendet. Die Farbzusammensetzung wird mittels Kürbis derart beeinflusst, dass das Aussehen des erfindungsgemäßen Ei-Ersatzprodukts nahe dem von natürlichem Voll-Ei entspricht.

Ferner umfasst das Ei-Ersatzprodukt gemäß der Erfindung vorteilhaft zwischen 10,0 (zehn Komma null) und 30,0 (dreißig Komma null) Gewichtsprozent Kichererbsen, insbesondere zwischen 15,0 (fünfzehn Komma null) und 25,0 (fünfundzwanzig Komma null) Gewichtsprozent Kichererbsen. Die Kichererbsen werden dem Ei-Ersatzprodukt bevorzugt als Kichererbsenmehl beigefügt. Kichererbsen enthalten insbesondere ca. 40 (vierzig) Gewichtsprozent Kohlenhydrate und ca. 20 (zwanzig) Prozent Eiweiß. Dieser Anteil an Eiweiß der Kichererbsen bewirkt, dass das Ei-Ersatzprodukt gemäß der Erfindung sich hinsichtlich seines Eiweißgehalts dem von Voll-Ei annähert. Bei Voll-Ei liegt der Eiweißgehalt bei ca. zehn bis zwölf Gewichtsprozent Eiweiß. Insbesondere für Konsumenten mit veganer Ernährung können Kichererbsen als "unbedenklicher" Eiweißlieferant genutzt werden.

Vorzugsweise umfasst ferner das erfindungsgemäße Ei-Ersatzprodukt zwischen 30,0 (dreißig Komma null) und 70,0 (siebzig Komma null) Gewichtsprozent Maisstärke, insbesondere zwischen 40,0 (vierzig Komma null) und 60,0 (sechzig Komma null) Gewichtsprozent Maisstärke. Maisstärke wird aus Mais gewonnen und auch erfindungsgemäß bevorzugt als Mehl oder in Pulverform verarbeitet. Erfindungsgemäß wird Maisstärke als Verdickungsmittel eingesetzt. Verdickungsmittel sind Stoffe, die Wasser binden. Durch das Binden von Wasser innerhalb des hergestellten Lebensmittels kommt es zu einer Erhöhung von dessen Viskosität. So kann der erfindungsgemäße Ei-Ersatzstoff selbst und auch das damit hergestellte Lebensmittel hinsichtlich seiner Konsistenz an das jeweilige natürliche Vorbild angepasst werden.

In bevorzugter Weise umfasst das erfindungsgemäße Ei-Ersatzprodukt zwischen 5,0 (fünf Komma null) und 15,0 (fünfzehn Komma null) Gewichtsprozent Maltodextrin, insbesondere zwischen 7,5 (sieben Komma fünf) und 12,5 (zwölf Komma fünf) Gewichtsprozent Maltodextrin. Maltodextrin ist ein Kohlenhydratgemisch, das durch Hydrolyse von Stärke hergestellt wird. Maltodextrin wird gemäß der Erfindung zur Verbesserung der rheologischen und energetischen Eigenschaften des Ei-Ersatzprodukts eingesetzt. Maltodextrin ist dabei vorteilhaft ein Stabilisator, der die Schaumstabilität des erfindungsgemäßen Ei-Ersatzprodukts verbessert. Maltodextrin wird gemäß der Erfindung bevorzugt als Pulver oder Granulat verwendet. Erfindungsgemäß bevorzugt umfasst das Ei-Ersatzprodukt ferner zwischen 0,1 (null Komma eins) und 5,0 (fünf Komma null) Gewichtsprozent Salz, insbesondere zwischen 0,8 (null Komma acht) und 1,3 (eins Komma drei) Gewichtsprozent Salz. Salz wird, wie allgemein bekannt, zur Konservierung von Lebensmitteln verwendet. Ein weiterer Vorteil von Salz ist, dass es als ein Geschmacksverstärker bzw. Geschmacksregulierer wirkt. Mittels des Salzes wird gemäß der Erfindung ein Geschmacksprofil des Ei-Ersatzprodukts erzeugt, welches an das Geschmacksprofil von Voll-Ei angeglichen ist.

Vorteilhaft umfasst das Ei-Ersatzprodukt gemäß der Erfindung ferner zwischen 0,1 (null Komma eins) und 2,0 (zwei Komma null) Gewichtsprozent Johannisbrotkern, insbesondere zwischen 0,3 (null Komma drei) und 0,9 (null Komma neun) Gewichtsprozent Johannisbrotkern. Johannisbrotkern wird hier vorzugsweise gemahlen als Johannisbrotkernmehl verarbeitet. Johannisbrotkern wird im erfindungsgemäßen Produkt als Verdickungsmittel genutzt. Der Vorteil von Johannisbrotkern liegt darin, dass es im hergestellten Nahrungsmittel Emulsionen stabilisiert und eine Kristallbildung unterbindet. Johannisbrotkern wird gemäß der Erfindung bevorzugt gemahlen als Mehl bzw. Pulver verwendet.

Ferner umfasst das erfindungsgemäße Ei-Ersatzprodukt vorzugsweise zwischen 0,1 (null Komma eins) und 2,0 (zwei Komma null) Gewichtsprozent Curcuma, insbesondere zwischen 0,3 (null Komma drei) und 0,8 (null Komma acht) Gewichtsprozent Curcuma. Curcuma bzw. Kurkuma ist eine Pflanzengattung aus der Familie der Ingwergewächse. Curcuma wird hier vorzugsweise pulverförmig verarbeitet. Es dient als Geschmacksträger und als gelber Farbstoff. Mittels des Curcumas wird das erfindungsgemäße Ei-Ersatzprodukt ebenfalls farblich an Voll-Ei angepasst.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: eine schematische Übersicht der Zusammensetzung eines ersten Ausführungsbeispiels eines erfindungsgemäßen Ei-Ersatzprodukts,
- Fig. 2: eine schematische Übersicht der Zusammensetzung eines zweiten Ausführungsbeispiels eines erfindungsgemäßen Ei-Ersatzprodukts,
- Fig. 3: eine schematische Übersicht der Zusammensetzung eines dritten Ausführungsbeispiels eines erfindungsgemäßen Ei-Ersatzprodukts.

### Detaillierte Beschreibung der Ausführungsbeispiele

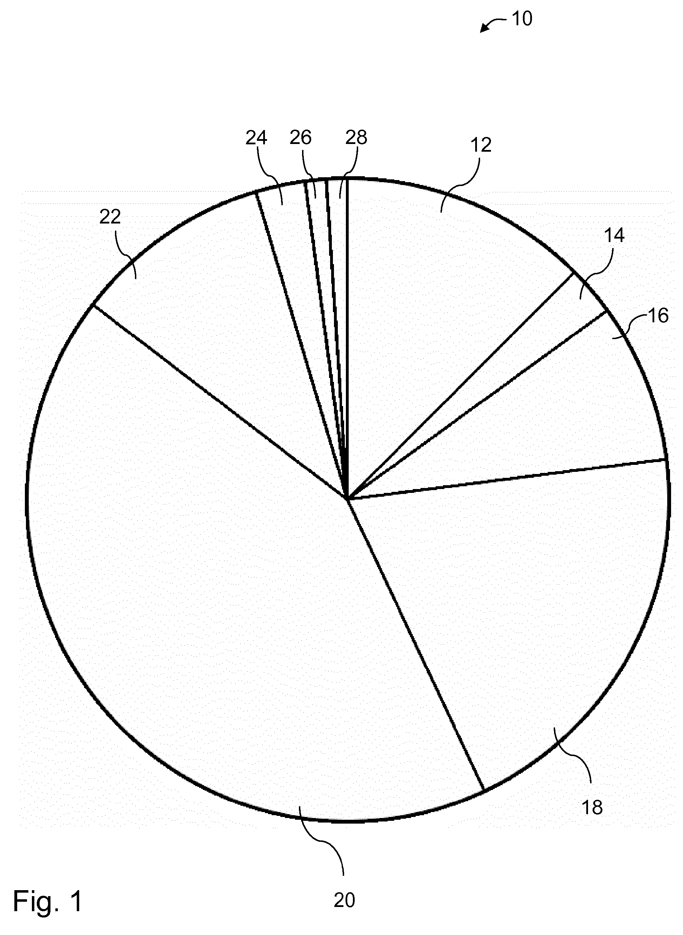

Fig. 1 zeigt die Zusammensetzung eines Ei-Ersatzprodukts 10. Bei dieser Zusammensetzung ist Lecithin 12 mit zwölf Komma fünf Gewichtsprozent im Ei-Ersatzprodukt 10 vorhanden. Als weiterer Bestandteil umfasst das Ei-Ersatzprodukt 10 Ascorbinsäure 14 mit zwei Komma fünf Gewichtsprozent und Kürbis 16 mit sechs Gewichtsprozent. Der Kürbis 16 ist dem Ei-Ersatzprodukt als Pulver beigemengt. Ein weiterer Bestandteil des Ei-Ersatzprodukts 10 gemäß Fig. 1 sind Kichererbsen 18 in Mehlform mit einem Anteil von fünfzehn Gewichtsprozent. Des Ei-Ersatzprodukts weist ferner einen Anteil an Maisstärke 20 von neunundvierzig Gewichtsprozent auf. Zudem ist Maltodextrin 22 mit zehn Gewichtsprozent enthalten. Das Ei-Ersatzprodukt 10 gemäß Fig. 1 umfasst auch Salz 24 mit zwei Komma fünf Gewichtsprozent und Johannisbrotkern 26 mit einem Gewichtsprozent. Curcuma 28 ist mit eins Komma fünf Gewichtsprozent in dem Ei-Ersatzprodukt 10 gemäß Fig. 1 enthalten.

Der Vorteil der Zusammensetzung des Ei-Ersatzproduktes 10 gemäß Fig. 1 ist eine besonders vorteilhafte rheologische Eigenschaft und ein besonders hervorragendes Kau- und Essgefühl beim Konsumenten im direkten Verzehr, etwa als Pfannenkuchen.

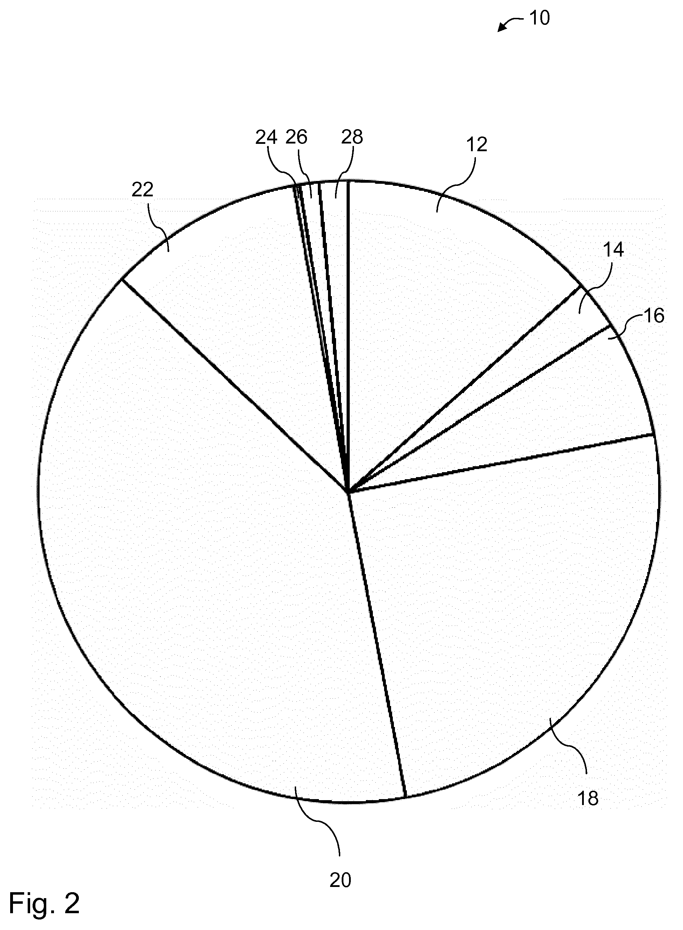

Fig. 2 zeigt eine zweite Zusammensetzung eines Ei-Ersatzprodukts 10. Bei dieser Zusammensetzung ist Lecithin 12 mit dreizehn Komma fünf Gewichtsprozent im Ei-Ersatzprodukt 10 vorhanden. Als weiterer Bestandteil umfasst das Ei-Ersatzprodukt 10 gemäß Fig. 2 Ascorbinsäure 14 mit zwei Komma fünf Gewichtsprozent und den Kürbis 16 mit sechs Gewichtsprozent. Der Kürbis 16 ist hier wie bei dem vorhergehenden Ei-Ersatzprodukt als Pulver beigemengt. Ein weiterer Bestandteil des Ei-Ersatzprodukts 10 gemäß Fig. 2 sind Kichererbsen 18 in Mehlform mit einem Anteil von fünfundzwanzig Gewichtsprozent. Das Ei-Ersatzprodukt 10 gemäß Fig. 2 weist auch einen Anteil an Maisstärke 20 von vierzig Gewichtsprozent auf. Zudem ist Maltodextrin 22 mit zehn Komma zwei Gewichtsprozent enthalten. Das Ei-Ersatzprodukt 10 der Fig. 2 umfasst Salz 24 mit null Komma drei Gewichtsprozent und Johannisbrotkern 26 als Mehl mit einem Gewichtsprozent. Curcuma 28 ist mit eins Komma fünf Gewichtsprozent in diesem Ei-Ersatzprodukt 10 enthalten.

Der Vorteil dieser Zusammensetzung eines Ei-Ersatzproduktes 10 liegt darin, dass es besonders salzarm ist.

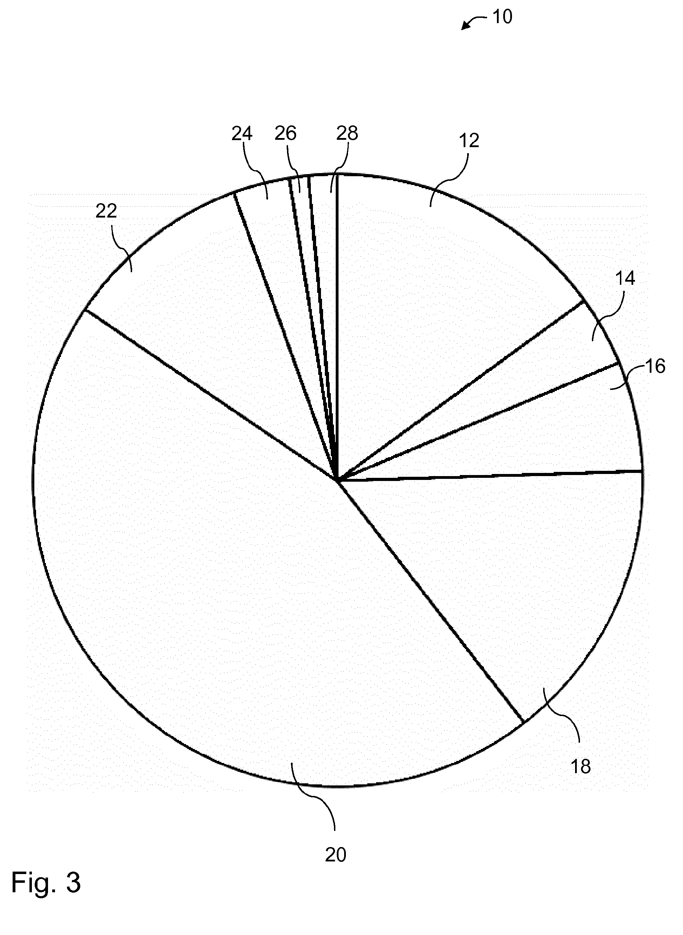

Fig. 3 zeigt eine dritte Zusammensetzung eines Ei-Ersatzprodukts 10. Bei dieser Zusammensetzung ist Lecithin 12 mit fünfzehn Gewichtsprozent im Ei-Ersatzprodukt 10 vorhanden. Als weiterer Bestandteil umfasst das Ei-Ersatzprodukt 10 der Fig. 3 Ascorbinsäure 14 mit drei Komma sieben Gewichtsprozent und Kürbis 16 mit fünf Komma acht Gewichtsprozent. Ein weiterer Bestandteil des Ei-Ersatzprodukts 10 gemäß Fig. 3 sind Kichererbsen 18 in Mehlform mit einem Anteil von fünfzehn Gewichtsprozent. Dieses Ei-Ersatzprodukts 10 weist ferner einen Anteil von Maisstärke 20 von fünfundvierzig Gewichtsprozent auf. Zudem ist Maltodextrin 22 mit zehn Gewichtsprozent enthalten. Das Ei-Ersatzprodukt 10 gemäß Fig. 3 umfasst auch Salz 24 ist mit drei Gewichtsprozent und Johannisbrotkern 26 mit einem Gewichtsprozent. Ferner ist auch Curcuma 28 mit eins Komma fünf Gewichtsprozent in diesem Ei-Ersatzprodukt enthalten.

Das derartige Ei-Ersatzprodukt 10 gemäß Fig. 3 ist besonders haltbar.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Ei-Ersatzprodukt
- 12: Lecithin
- 14: Ascorbinsäure
- 16: Kürbis
- 18: Kichererbsen
- 20: Maisstärke
- 22: Maltodextrin
- 24: Salz
- 26: Johannisbrotkern
- 28: Curcuma

## Patentansprüche

1. Ei-Ersatzprodukt,
das zwischen 0,3 und 25,0 Gewichtsprozent Lecithin (12) pflanzlicher Herkunft umfasst.

2. Ei-Ersatzprodukt nach Anspruch 1,
das zwischen 6,5 und 18,8 Gewichtsprozent Lecithin (12) pflanzlicher Herkunft, insbesondere zwischen 10,0 und 15,0 Gewichtsprozent Lecithin (12) pflanzlicher Herkunft umfasst.

3. Ei-Ersatzprodukt nach Anspruch 1 oder 2,
das ferner zwischen 0,1 und 5,0 Gewichtsprozent Ascorbinsäure (14), insbesondere zwischen 0,3 und 0,8 Gewichtsprozent Ascorbinsäure (14) umfasst.

4. Ei-Ersatzprodukt nach einem der Ansprüche 1 bis 3,
das ferner zwischen 3,0 und 13,0 Gewichtsprozent Kürbis (16), insbesondere zwischen 4,0 und 6,5 Gewichtsprozent Kürbis (16) umfasst.

5. Ei-Ersatzprodukt nach einem der Ansprüche 1 bis 4,
das ferner zwischen 10,0 und 30,0 Gewichtsprozent Kichererbsen (18), insbesondere zwischen 15,0 und 25,0 Gewichtsprozent Kichererbsen (18) umfasst.

6. Ei-Ersatzprodukt nach einem der Ansprüche 1 bis 5,
das ferner zwischen 30,0 und 70,0 Gewichtsprozent Maisstärke (20), insbesondere zwischen 40,0 und 60,0 Gewichtsprozent Maisstärke (20) umfasst.

7. Ei-Ersatzprodukt nach einem der Ansprüche 1 bis 6,
das ferner zwischen 5,0 und 15,0 Gewichtsprozent Maltodextrin (22), insbesondere zwischen 7,5 und 12,5 Gewichtsprozent Maltodextrin (22) umfasst.

8. Ei-Ersatzprodukt nach einem der Ansprüche 1 bis 7,
das ferner zwischen 0,1 und 5,0 Gewichtsprozent Salz (24), insbesondere zwischen 0,8 und 1,3 Gewichtsprozent Salz (24) umfasst.

9. Ei-Ersatzprodukt nach einem der Ansprüche 1 bis 8,
das ferner zwischen 0,1 und 2,0 Gewichtsprozent Johannisbrotkern (26), insbesondere zwischen 0,3 und 0,9 Gewichtsprozent Johannisbrotkern (26) umfasst.

10. Ei-Ersatzprodukt nach einem der Ansprüche 1 bis 9,
das ferner zwischen 0,1 und 2,0 Gewichtsprozent Curcuma (28), insbesondere zwischen 0,3 und 0,8 Gewichtsprozent Curcuma (28) umfasst.
